(19) Europäisches Patentamt / European Patent Office / Office européen des brevets

(11) **EP 4 364 878 A1**

(12) **EUROPEAN PATENT APPLICATION**
published in accordance with Art. 153(4) EPC

(43) Date of publication:
**08.05.2024 Bulletin 2024/19**

(21) Application number: **22852810.5**

(22) Date of filing: **15.07.2022**

(51) International Patent Classification (IPC):
**B23K 9/29** (2006.01)   **B23K 9/16** (2006.01)

(52) Cooperative Patent Classification (CPC):
**B23K 9/16; B23K 9/29**

(86) International application number:
**PCT/JP2022/027859**

(87) International publication number:
**WO 2023/013386 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.08.2021 JP 2021129974**

(71) Applicant: **KABUSHIKI KAISHA KOBE SEIKO SHO
(KOBE STEEL, LTD.)
Hyogo 651-8585 (JP)**

(72) Inventors:
• **CHEN, Zhuyao**
 **Kobe-shi, Hyogo 651-2271 (JP)**
• **KUROSAWA, Eisuke**
 **Kobe-shi, Hyogo 651-2271 (JP)**

(74) Representative: **Müller-Boré & Partner
Patentanwälte PartG mbB
Friedenheimer Brücke 21
80639 München (DE)**

(54) **SHIELD JIG AND GAS SHIELD ARC WELDING DEVICE**

(57) A shielding includes a first outer shell member that surrounds a welding torch, is disposed to form a radial gap from the welding torch, and is configured to define a first annular space having a first opening in a bottom portion thereof, a first gas supply member disposed to surround the welding torch inside the first outer shell member, and configured to supply a shielding gas to the first annular space, and a dispersing member disposed below the first gas supply member in the first annular space, and configured to disperse the shielding gas.

FIG. 2

EP 4 364 878 A1

**Description**

TECHNICAL FIELD

The present invention relates to a shielding jig and a gas-shielded metal arc welding apparatus.

BACKGROUND ART

Gas-shielded metal arc welding in which a shielding gas (inert gas) is supplied to a weld to shield the weld from air to prevent oxidation is common. A welding torch used for such gas-shielded metal arc welding is described in, for example, Patent Literature 1.

The welding torch in Patent Literature 1 has a configuration in which each of a shielding gas passage included in the welding torch and a control gas passage that controls a cross-sectional shape of a weld bead is an independent passage, and the above-described passages are arranged in a vertical column at positions symmetrical in a front-rear direction with a welding arc portion as a center with respect to a welding travel direction. Patent Literature 1 discloses that, according to this configuration, in welding with a narrow gap, a front shielding gas flow path and a rear shielding gas flow path are provided to control a flow velocity of a gas, thereby improving the cross-sectional shape and penetration of the weld bead.

CITATION LIST

PATENT LITERATURE

Patent Literature 1: JP H01-048678 A

SUMMARY OF INVENTION

TECHNICAL PROBLEM

When the gas-shielded metal arc welding is performed using a base metal or filler metal (welding wire) made of an active metal, the active metal has a particularly strong affinity for the atmosphere at a high temperature, and reacts with oxygen or nitrogen in the air to easily form an oxide or a nitride. Therefore, portions where the oxide and the nitride are formed after welding are significantly hardened and weakened. When the gas-shielded metal arc welding is performed with the active metal, generally, in order to avoid contact between the atmosphere and the active metal, local gas shielding in the vicinity of the welding torch is performed using a jig for after-shielding. However, when additive manufacturing is performed by melting a filler metal such as pure titanium or a titanium alloy, it is still difficult to reduce inclusion of oxygen and nitrogen in an additively-manufactured object to a specified value or less only by using the jig for after-shielding.

For example, oxygen or nitrogen that adheres to other members such as a base metal or air is present in a front side in the welding travel direction, and it is difficult to prevent inclusion of the oxygen and nitrogen. Further, since the shielded range covered by the shielding gas is narrow in the current shielding jig, during the additive manufacturing, it is difficult to ensure a gas shielding property for a weld bead that is adjacent to a weld bead formed by welding and is subjected to a high temperature. Further, depending on the welding travel direction, the gas shielding property is insufficient, and there is a possibility that the additive manufacturing by a manipulator is restricted.

Accordingly, an object of the present invention is to provide a shielding jig and a gas-shielded metal arc welding apparatus by which a gas shielding property can be normally and stably ensured in a wide range during gas-shielded metal arc welding.

SOLUTION TO PROBLEM

The present invention includes the following configuration.

(1) A shielding jig which is attached to a welding torch for shield welding, the welding torch being configured to melt and solidify a filler metal material made of a metal to form a weld bead, the shielding jig comprising:

a first outer shell member that surrounds the welding torch, is disposed to form a radial gap from the welding torch, and is configured to define a first annular space having a first opening in a bottom portion thereof;
a first gas supply member that is disposed to surround the welding torch inside the first outer shell member, and is configured to supply a shielding gas to the first annular space; and

a dispersing member that is disposed below the first gas supply member in the first annular space, and is configured to disperse the shielding gas.

(2) A gas-shielded metal arc welding apparatus comprising:
the shielding jig according to (1).

ADVANTAGEOUS EFFECTS OF INVENTION

According to the present invention, a gas shielding property can be normally and stably ensured in a wide range during gas-shielded metal arc welding.

BRIEF DESCRIPTION OF DRAWINGS

Fig. 1 is a schematic configuration view of a gas-shielded metal arc welding apparatus.
Fig. 2 is a perspective view of a shield nozzle at a tip of a welding torch and a shielding jig of a first configuration example which is provided on an outer periphery of the shield nozzle.
Fig. 3 is a schematic cross-sectional view of an internal structure of the shield nozzle.
Fig. 4 is a schematic cross-sectional view of an internal structure of the shielding jig of the first configuration example.
Fig. 5 is a schematically illustrated view of a flow of a shielding gas by the welding torch during welding and the shielding jig of the first configuration example.
Fig. 6A is a schematically illustrated plan view of a weld bead formed using the shielding jig.
Fig. 6B is a schematically illustrated side view of the weld bead formed using the shielding jig.
Fig. 7 is a graph showing the relation between an oxygen content and a nitrogen content in the weld bead in each test example illustrated in Fig. 6.
Fig. 8 is a schematic cross-sectional view of an internal structure of a shielding jig of a second configuration example.
Fig. 9 is a schematically illustrated view of a flow of a shielding gas by the welding torch during welding and the shielding jig of the second configuration example.
Fig. 10 is a perspective view of a schematic configuration of a shielding jig of a modification in which a rectification unit that controls a flow direction of the shielding gas is provided in the shielding jig of the second configuration example.
Fig. 11A is a partial cross-sectional view of a bottom portion of the shielding jig for illustrating a state of the shielding gas sprayed from the shielding jig.
Fig. 11B is a cross-sectional view of a formed gas curtain, taken along line XI-XI illustrated in Fig. 11A, for illustrating the state of the shielding gas sprayed from the shielding jig.

DESCRIPTION OF EMBODIMENTS

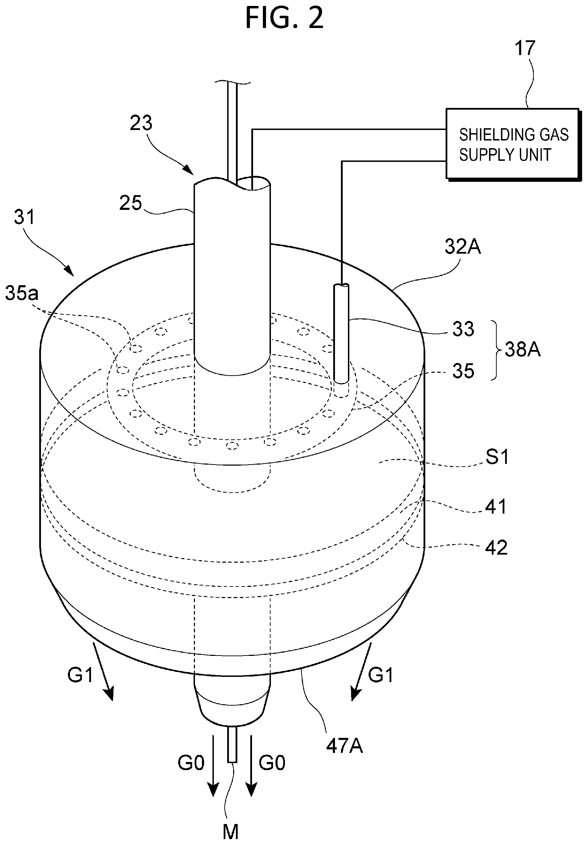

Hereinafter, embodiments of the present invention are described in detail with reference to the drawings.
Although the shielding jig in the present invention is described here using an example in which an additively-manufactured object is additively manufactured by gas-shielded metal arc welding, the present invention is not limited thereto.

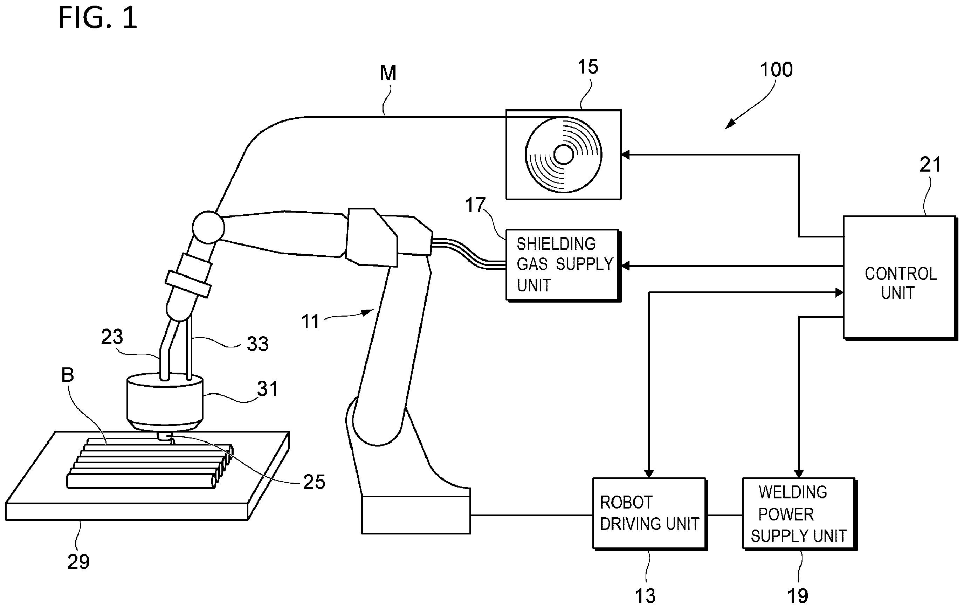

Fig. 1 is a schematic configuration view of a gas-shielded metal arc welding apparatus.
A gas-shielded metal arc welding apparatus 100, which is an apparatus for manufacturing an additively-manufactured object, includes a welding robot 11, a robot driving unit 13, a filler metal supply unit 15, a shielding gas supply unit 17, a welding power supply unit 19, and a control unit 21.
The welding robot 11 is an articulated robot, and a welding torch 23 is supported on a tip shaft thereof. The position and orientation of the welding torch 23 can be freely set three-dimensionally within a movable range of a robot arm. The welding torch 23 holds a filler metal M continuously supplied from the filler metal supply unit 15 in a state of protruding from a tip of the welding torch.
The shielding gas supply unit 17 supplies an inert gas to a weld. In MIG welding, argon, helium (or a mixed gas thereof), or a gas obtained by adding a small amount of an active gas such as oxygen or a carbon dioxide gas thereto is used as the shielding gas. On the other hand, the carbon dioxide gas or a mixed gas of the argon and the carbon dioxide gas is used as the shielding gas in MAG welding, and the argon gas is used in TIG welding. Further, in laser welding, nitrogen, argon, helium, or the like is used as the shielding gas.
The welding torch 23 is a welding torch for shielded welding that is for melting and solidifying the filler metal M made of a metal to form a weld bead. Specifically, the welding torch 23 has a shield nozzle 25 that receives the shielding gas supplied from the shielding gas supply unit 17 (see Fig. 2 to Fig. 5), and the shielding gas is supplied from the shield nozzle 25 to the weld. An arc welding method may be any one of a consumable electrode-based welding method such as shielded metal arc welding or carbon dioxide gas arc welding, and a non-consumable electrode-based welding method such as the TIG welding or plasma arc welding, and is appropriately selected depending on the additively-manufactured object to be manufactured.

A heat source for melting the filler metal M is not limited to the above-described arc. For example, a heat source using another method such as a heating method using both an arc and a laser, a heating method using plasma, or a heating method using an electron beam or a laser may be used. When heating is performed by the electron beam or laser, a heating amount can be more precisely controlled, a state of the weld bead can be more appropriately maintained, thereby contributing to further improvement in quality of an additively-manufactured object.

As the filler metal, for example, a welding wire for titanium and titanium alloy welding made of pure titanium or a titanium alloy is used (for example, see JIS Z 3331). When the filler metal is the pure titanium or the titanium alloy, appropriate welding can be performed even when a welding base metal is a titanium-based material. The filler metal is not limited to the above-described material, and may be another material.

A shielding jig 31 is attached to an outer periphery of the welding torch 23. In the shielding jig 31, the shielding gas is supplied from the shielding gas supply unit 17 and the shielding gas is sprayed toward the weld. Details of the shielding jig 31 are described below.

The robot driving unit 13 drives each unit of the welding robot 11 in response to an instruction from the control unit 21, and controls an output of a welding power supply as necessary.

The control unit 21 is configured by a computer device including a CPU, a memory, a storage, and the like, and executes a drive program prepared in advance or a drive program created under desired conditions to drive each unit such as the welding robot 11. Accordingly, the welding torch 23 is moved in accordance with the drive program to deposit a weld bead B having a plurality of layers on a base plate 29, thereby producing an additively-manufactured object having a multilayer structure.

<First Configuration Example>

Fig. 2 is a perspective view of the shield nozzle 25 at the tip of the welding torch 23 and the shielding jig 31 of a first configuration example provided on an outer periphery of the shield nozzle 25.

As described above, the shielding gas supply unit 17 supplies the shielding gas to both the welding torch 23 and the shielding jig 31. The shield nozzle 25 of the welding torch 23 allows the filler metal M to protrude from a nozzle tip portion and sprays the shielding gas G0 supplied from the shielding gas supply unit 17 toward the weld below.

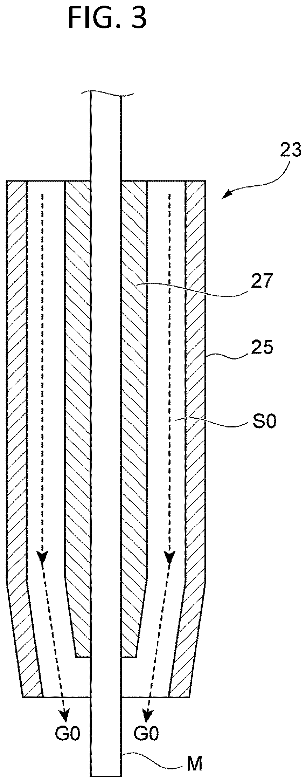

Fig. 3 is a schematic cross-sectional view of an internal structure of the shield nozzle 25.

The shield nozzle 25 illustrated here is a consumable electrode type. A contact tip 27 is disposed inside the shield nozzle 25, and the contact tip 27 holds the filler metal M to which a melting current is supplied. The welding torch 23 holds the filler metal M and generates an arc from the tip of the filler metal M in a shielding gas atmosphere. The filler metal M is fed to the welding torch 23 by a feeding mechanism (not illustrated) attached to a part of the welding robot 11 illustrated in Fig. 1. When the filler metal M continuously fed is melted and solidified while the welding torch 23 moves, the weld bead B which is a molten and solidified body of the filler metal M is formed on the base plate 29. At this time, the shielding gas G0 supplied from the shielding gas supply unit 17 is sprayed from the welding torch 23 through an internal space S0 defined inside the shield nozzle 25 to gas-shield the periphery of the filler metal M.

A first gas supply pipe 33 is connected to the shielding jig 31 illustrated in Fig. 2. A tip of the first gas supply pipe 33 penetrates an upper surface of the shielding jig 31, is inserted into the jig, and is connected to an annular first hollow pipe 35. The first hollow pipe 35 is disposed above a first annular space S1 inside the jig, and a plurality of spray ports 35a are formed at equal intervals over the entire circumference thereof. Shielding gas G1 supplied from the first gas supply pipe 33 is sprayed upward from the spray ports 35a of the first hollow pipe 35, and then flows towards the lower side of the first annular space S1.

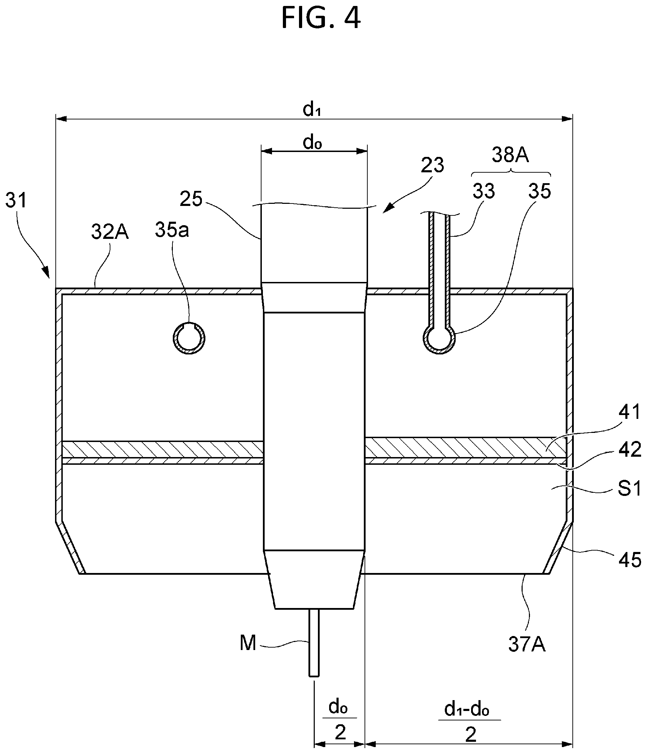

Fig. 4 is a schematic cross-sectional view of an internal structure of the shielding jig 31 of the first configuration example.

The shielding jig 31 is provided on the outer periphery of the shield nozzle 25 provided at the tip of the welding torch 23. The shielding jig 31 includes a first outer shell member 32A, a first gas supply member 38A, and a dispersing member 41.

The first outer shell member 32A surrounds the welding torch 23, is disposed to form a radial gap from the welding torch 23 towards the outside, and defines a first annular space S1 having a first opening 37A in a bottom portion thereof. The first outer shell member 32A is configured by a sheet metal member whose outer peripheral surface is formed in a substantially cylindrical shape. A hole is provided in the center of an upper surface of the first outer shell member 32A, the shield nozzle 25 penetrates the hole, and the first outer shell member 32A and the shield nozzle 25 are fixed by an appropriate method such as welding, screwing, or a clamp mechanism. The material, structure, and the like of the first outer shell member 32A are not particularly limited.

The first gas supply member 38A includes a first gas supply pipe 33 and a first hollow pipe 35. The first gas supply pipe 33 is configured by a linear hollow pipe penetrating the upper surface of the first outer shell member 32A. The first hollow pipe 35 is configured by an annular hollow pipe disposed in the first annular space S1, and has the plurality of spray ports 35a on an upper surface thereof, from which the shielding gas is supplied. That is, the first gas supply member 38A is disposed to surround at least the outer peripheral surface of the welding torch 23 in the first annular space S1, and the plurality of spray ports 35a from which the shielding gas is supplied are provided on an upper side in a spraying direction. The shielding gas that passed through the first gas supply pipe 33 is supplied to the first hollow pipe 35, and is uniformly sprayed from the spray ports 35a of the first hollow pipe 35 to an upper side of the first hollow pipe 35 over the entire circumference. Thereafter, the sprayed shielding gas flows towards the lower side of the first annular space S1, passes through the dispersing member 41 supported by a holding member 42, and then reaches the first opening 37A formed in a bottom surface of the first annular space S1.

The dispersing member 41 is disposed below the first gas supply member 38A in the first annular space S1 and serves to disperse the shielding gas supplied from the first gas supply member 38A in the first annular space S1. A hole is provided at the center of the dispersing member 41, and the shield nozzle 25 penetrates the hole. An outer periphery of the dispersing member 41 has a circular shape in contact with an inner peripheral surface of the first outer shell member 32A. The dispersing member 41 is configured by a fibrous member such as glass wool or steel wool, and disperses the shielding gas inside the first annular space S1. The material of the dispersing member 41 may be a material other than the above-described material, and is not particularly limited.

A hole is provided in the center of the holding member 42, and the shield nozzle 25 penetrates the hole. An outer periphery of the holding member 42 has a circular shape in contact with the inner peripheral surface of the first outer shell member 32A. The holding member 42 may be configured by, for example, a stainless-steel mesh member through which the shielding gas can pass, but the material, shape, and the like of the holding member 42 are not particularly limited. Further, the holding member 42 may have, for example, a mesh size of 0.1 mm to 1.0 mm, preferably 0.3 mm to 0.7 mm, and may have a gas rectifying function. In this case, the holding member 43 also functions as a dispersing member.

The outer periphery of the holding member 42 is fixed to the inner peripheral surface of the first outer shell member 32Aby welding or the like, and the dispersing member 41 is placed on or attached to an upper surface of the holding member 42. Accordingly, the holding member 42 can stably hold the dispersing member 41 in the first annular space S1.

Further, although not illustrated, by providing a shielding member (a heat insulating tape or the like) for the shielding gas in the holding member 42, it is possible to limit a flow path of the shielding gas and easily adjust a discharge area, a flow rate, and the like of the shielding gas. Note that, in the holding member 42, the outer periphery of the dispersing member 41 may be directly joined to the inner peripheral surface of the first outer shell member 32A, and in that case, the holding member 42 can be omitted.

In the shielding jig 31 configured as described above, the shielding gas is sprayed from the first hollow pipe 35 surrounding the welding torch 23, and the dispersing member 41 further disperses the shielding gas flowing through the first annular space S1. Thus, the entire periphery of the weld can be evenly gas-shielded in a wider range by using the shielding jig 31 as compared with the case of using a jig used in general welding, such as an after-shielding jig.

Although the bottom portion of the first outer shell member 32A is formed with a narrowed portion 45 in which a radius distance of the first outer shell member 32A gradually decreases along an axial direction of the welding torch 23, the bottom portion of the first outer shell member 32A may be configured by a straight cylindrical body without the narrowed portion 45.

Here, an outer diameter $d_0$ of the welding torch 23 (shield nozzle 25) and an outer diameter $d_1$ of the first outer shell member 32A have a relationship of $d_1 > d_0$. Further, when a flow velocity of the shielding gas sprayed from the first opening 37A, which is an opening of the first annular space S1, is Vout and a stopcock flow velocity of the shielding gas supplied to the first annular space S1 is Vin, the flow velocity Vout of the shielding gas from the first opening 37A is determined by Formula (1).

[Formula 1]

$$V_{out} = \frac{V_{in}\,[\mathrm{mm^3/sec}]}{\frac{\pi}{4} \times (d_1^2 - d_0^2)\,[\mathrm{mm^2}]} \geq 113.17\,[\mathrm{mm/sec}] \quad \cdots (1)$$

That is, in the shielding jig 31, the stopcock velocity Vin of the shielding gas, the outer diameter $d_0$ of the welding torch 23, and the outer diameter $d_1$ of the first outer shell member 32A are set such that the flow velocity Vout of the shielding gas sprayed from the lower side of the first annular space S1 is 113.17 mm/sec or more. Here, the stopcock velocity Vin of the shielding gas corresponds to a gas velocity based on a gas supply pressure exerted by the shielding gas supply unit 17.

As described above, by setting the flow velocity Vout of the shielding gas sprayed from the first annular space S1 to 113.17 mm/sec or more, it is possible to allow a necessary and sufficient amount of the shielding gas to flow even in the front side in a welding travel direction, and it is possible to effectively prevent inclusion of oxygen or nitrogen adhering to various members or air in the weld. Further, since the outer diameter $d_1$ of the first outer shell member 32A is set to be equal to or larger than a predetermined size, a weld bead that is close to the weld bead just formed by welding and may have a high temperature can be accommodated in a shielding gas atmosphere. Thus, a reliable gas shielding property can be ensured. Further, by ensuring the size (radius distance) of the first outer shell member 32A, it is possible to prevent variation of the gas shielding property caused by the welding direction, and it is possible to improve the flexibility of additive manufacturing using the welding robot.

That is, according to the shielding jig 31, it is possible to obtain a high gas shielding effect by appropriately setting the inner diameter and outer diameter of the first outer shell member 32A based on the flow rate of the shielding gas to be used.

Since the first opening 37A, which is a spray port of the shielding gas, has an annular shape similarly to the cross section of the first annular space S1, the shielding gas G1 sprayed from the first opening 37A forms a curtain having a cylindrical shape. The first opening 37A has an annular shape continuous in a circumferential direction, but is not limited thereto, and may have a configuration in which a large number of openings are arranged along the circumferential direction, and the shape of the first opening 37A is not particularly limited.

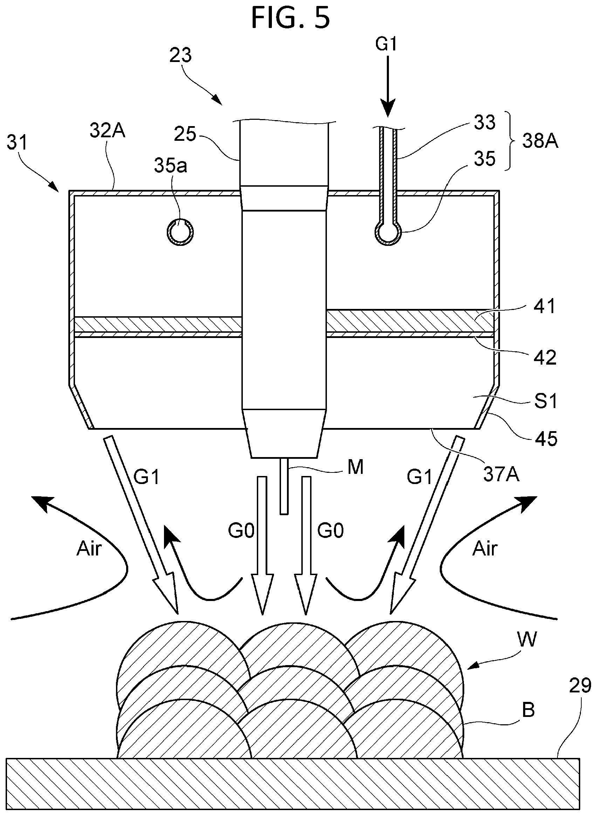

Fig. 5 is a schematically illustrated view of a flow of a shielding gas by the welding torch 23 during welding and the shielding jig 31 of the first configuration example.

The welding torch 23 is moved to deposit the weld bead B having the plurality of layers on the base plate 29, thereby producing an additively-manufactured object W having a multilayer structure. At this time, the shielding gas G0 is sprayed from the shield nozzle 25 at the tip of the welding torch 23. Further, the shielding jig 31 annularly sprays the shielding gas G1 supplied to the first annular space S1 from the entire periphery of the first opening 37A toward the base plate 29.

The shielding gas G1 sprayed from the first opening 37A forms the gas curtain having the cylindrical shape. The shielding gas G1 has an effect of confining the shielding gas G0 sprayed from the welding torch 23 to an inside of the formed gas curtain and blocking inflow of air Air from an outside. Accordingly, the weld bead B during welding is effectively separated from oxygen or nitrogen adhering to other members or external air, and it is possible to prevent inclusion of impurities into the additively-manufactured object W.

Further, due to the narrowed portion 45 at the bottom portion of the first outer shell member 32A, a spraying direction of shielding gas G2 from the shielding jig 31 approaches a welding torch 23 side. As a result, a position where the shielding gas G0 from the welding torch 23 contacts with the weld and a position where the shielding gas G1 from the shielding jig 31 contacts with the weld come close to each other, and it can be expected that a retention effect of the shielding gas is enhanced.

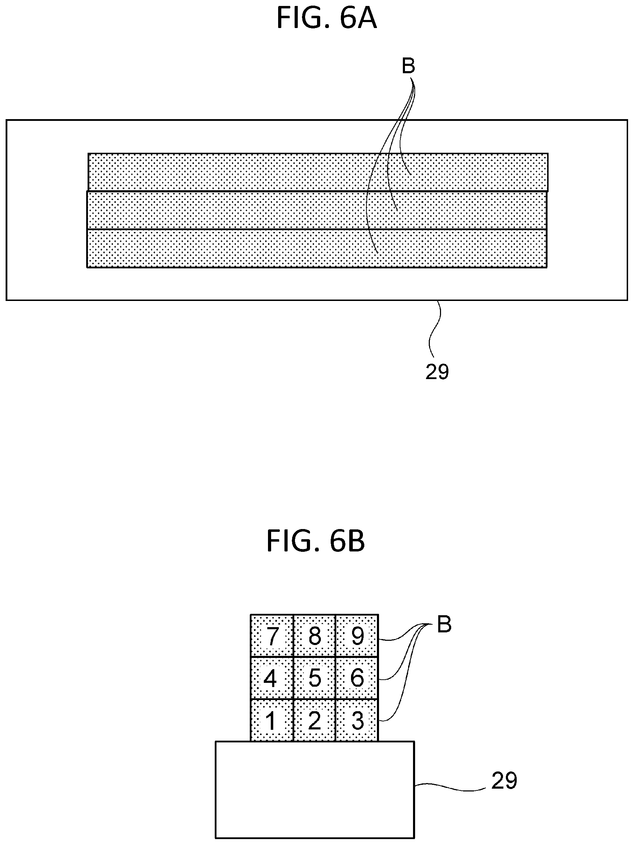

Fig. 6A is a schematically illustrated plan view of a weld bead formed using the shielding jig. Fig. 6B is a schematically illustrated side view of the weld bead formed using the shielding jig.

In the present test example, two kinds of shielding jigs having the outer diameter $d_1$ of φ100 mm (Test Example 1) and φ 150 mm (Test Example 2) were prepared, and under the following conditions, the weld bead B having three columns × three layers was formed on the base plate 29.

Filler metal: titanium wire (manufactured by Daido Steel Co., Ltd.)
Travel speed: 20 cpm
Filler metal feeding speed: 6.2 mpm
Shielding gas: argon gas
Amount of shielding gas supplied to welding torch: 20 L/min
Amount of shielding gas supplied to shielding jig: 50 L/min
Shaft length of shielding jig: 50 mm
Outer diameter of welding torch: φ25 mm
Annular diameter of first hollow pipe: φ80 mm
Holding member: stainless steel mesh having a mesh opening size of 0.5 mm

The order of forming the weld bead B is indicated by numbers in Fig. 6B. The weld bead B was formed by manufacturing two samples in each of Test Examples 1 and 2, that is, four samples in total.

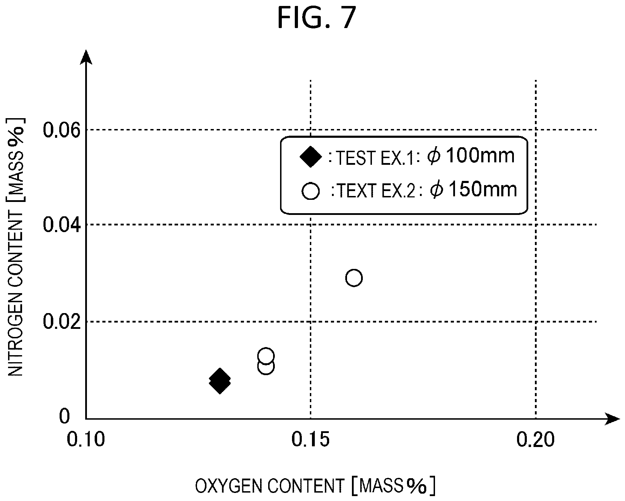

Fig. 7 is a graph showing the relation between an oxygen content and a nitrogen content in the weld bead B in each test example illustrated in Figs. 6A and 6B. In each of the test examples, inclusion of oxygen and nitrogen is controlled to a low level, and particularly in Test Example 2, the oxygen content and the nitrogen content are lower than those in Test Example 1. It is considered that this is because, when the amount of the shielding gas supplied to the shielding jig is constant, the smaller the outer diameter d1 is, the faster the flow velocity of the gas sprayed from the shielding jig is, the gas shielding property is improved, and inclusion of air by the arc heat can be prevented.

The flow velocity of the shielding gas sprayed from the first opening 37A was 48.05 mm/sec in Test Example 1 and 113.17 mm/sec in Test Example 2. When the flow velocity is equal to or higher than that of Test Example 2, inclusion of impurities is more reliably prevented, and good welding can be performed.

<Second Configuration Example>

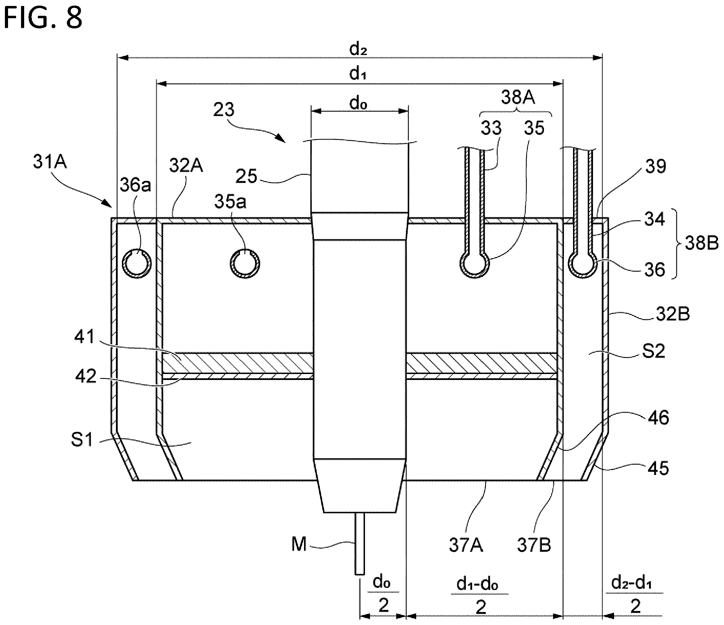

Fig. 8 is a schematic cross-sectional view of an internal structure of a shielding jig 31A of a second configuration example.

The shielding jig 31A of this configuration includes a second outer shell member 32B and a second gas supply member 38B in addition to the configuration of the shielding jig 31 of the first configuration example.

The second outer shell member 32B is disposed outside the outer peripheral surface of the first outer shell member 32A so as to have a radial gap therebetween, and defines a second annular space S2 between the first outer shell member 32A and the second outer shell member 32B. An upper portion of the second annular space S2 is closed by a lid portion 39, and a bottom portion of the second annular space S2 has a second opening 37B. The second outer shell member 32B has an outer peripheral surface in a cylindrical shape, and $d_2 > d_1 > d_0$ is satisfied, where $d_0$ is an outer diameter of the welding torch 23 (shield nozzle 25), $d_1$ is an outer diameter of the first outer shell member 32A, and $d_2$ is an inner diameter of the second outer shell member 32B.

The second outer shell member 32B is configured by a sheet metal member formed in a substantially cylindrical shape. A hole is provided in the center of an upper surface of the second outer shell member 32B, and the first outer shell member 32A is fixed to the hole. The material, structure, and the like of the second outer shell member 32B are not particularly limited.

The second gas supply member 38B includes a second gas supply pipe 34 and a second hollow pipe 36. The second gas supply pipe 34 is configured by a linear hollow pipe penetrating the upper surface of the second outer shell member 32B. The second hollow pipe 36 is configured by an annular hollow pipe disposed in the second annular space S2, and has a plurality of spray ports 36a on an upper surface thereof, from which a shielding gas is supplied. That is, the second gas supply member 38B is disposed to surround at least the outer peripheral surface of the first outer shell member 32A in the second annular space S2, and the plurality of spray ports 36a are provided on an upper side in a spraying direction of the shielding gas. The shielding gas that passed through the second gas supply pipe 34 is supplied to the second hollow pipe 36, and is uniformly sprayed from the spray ports 36a of the second hollow pipe 36 to an upper side of the second hollow pipe 36 over the entire circumference. Thereafter, the sprayed shielding gas flows towards the lower side of the second annular space S2 and reaches the second opening 37B formed in a bottom surface of the second annular space S2.

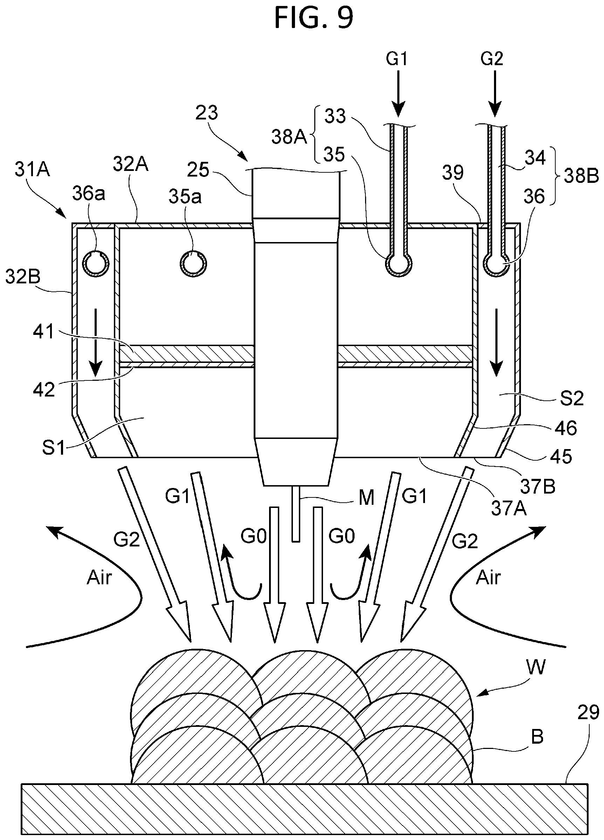

Fig. 9 is a schematically illustrated view of a flow of shielding gas by the welding torch 23 during welding and the shielding jig 31A of the second configuration example.

The welding torch 23 is moved to deposit the weld bead B having the plurality of layers on the base plate 29, thereby producing an additively-manufactured object W having a multilayer structure. At this time, the shield nozzle 25 at the tip of the welding torch 23 sprays the shielding gas G0 together with the filler metal M. Further, the shielding jig 31A annularly sprays the shielding gas G1 supplied to the first annular space S1 and the shielding gas G2 supplied to the second annular space S2 from the entire periphery of the first opening 37A and the second opening 37B toward a tip side of the welding torch 23.

The shielding gas G1 sprayed from the first opening 37A forms the gas curtain having the cylindrical shape. The shielding gas G1 has an effect of confining the shielding gas G0 sprayed from the welding torch 23 to an inside of the formed gas curtain and blocking inflow of the air Air from an outside. Accordingly, the weld bead B during welding is effectively separated from oxygen or nitrogen adhering to other members or external air, and it is possible to prevent inclusion of impurities in the additively-manufactured object W.

The shielding gas G2 sprayed from the second opening 37B also forms a gas curtain having a cylindrical shape. The shielding gas G2 has an effect of confining the shielding gas G0 sprayed from the welding torch 23 and the shielding gas G1 sprayed from the first opening 37A to an inside of the formed gas curtain and blocking the inflow of the air Air from an outside. In this case, a spray velocity of the shielding gas G2 is faster than a spray velocity of the shielding gas G1 due to a difference in an opening area of the bottom portions. Accordingly, the shielding gas G2 on the outer side embraces the shielding gas G1 on the inner side, and a double gas curtain is formed. Thus, by a synergistic effect of the shielding gas G1 and G2, it is possible to further prevent inclusion of impurities from the outside in the additively-manufactured object W.

The narrowed portion 45 in which a radius distance of the second outer shell member 32B gradually decreases along an axial direction of the welding torch 23 is formed at a bottom portion of the second outer shell member 32B.

Along with the formation of the narrowed portion 45, a narrowed portion 46 corresponding thereto is also formed at a bottom portion of the first outer shell member 32A. A radial gap between the narrowed portion 45 and the narrowed portion 46 is constant along a circumferential direction, and is set to be substantially equal to a size of the radial gap other than the bottom portions, i.e. $(d_2 - d_1)/2$. Accordingly, a point where the shielding gas G0, the shielding gas G1, and the shielding gas G2 collide with one another comes close to a welding torch 23 side, and it can be expected that a retention effect of the shielding gas is further enhanced. The shielding jig 31A may be configured by a straight cylindrical body without the narrowed portions 45 and 46.

Further, relative sizes of the first outer shell member 32A and the second outer shell member 32B with respect to the welding torch 23 are designed such that $d_1 - d_0 > d_2 - d_1$ is satisfied, where $d_0$ is the outer diameter of the welding torch 23, $d_1$ is the outer diameter of the first outer shell member 32A, and $d_2$ is the inner diameter of the second outer shell member 32B. Accordingly, a radial direction width of the first annular space S 1 becomes larger than a radial direction width of the second annular space S2, and an amount of shielding gas can be saved.

That is, in this configuration, a shielding gas supply source is a single shielding gas supply unit 17 (Fig. 2), and the shielding gas supply unit 17 supplies the shielding gas to each of the welding torch 23, the first gas supply member 38A, and the second gas supply member 38B. In order to stably supply the shielding gas G0 from the welding torch 23, the shielding gas supply unit 17 controls the supply of the shielding gas to a prescribed constant amount. Therefore, a supply pressure of the shielding gas in the welding torch 23 is controlled to be constant. At this time, since the shielding jig 31A receives the same gas supply pressure as the gas supply pressure of the welding torch 23 and sprays the shielding gas G1 and the shielding gas G2, the smaller a cross-sectional area of the second annular space S2 is, the faster a flow velocity of the shielding gas G2 is. Accordingly, gas curtains having different flow velocity on an inner peripheral side and an outer peripheral side can be easily generated, and the gas shielding property can be improved. Further, since the gas curtain on the outer peripheral side having a high flow velocity is made thinner than the gas curtain on the inner peripheral side having a low flow velocity, a consumption amount of the gas is reduced.

Further, after the removal of the air present in the first annular space S1 is completed, the supply of the shielding gas G1 may be stopped and the shielding gas may be supplied only to the second annular space S2. In this case, it is possible to save the consumption amount of the shielding gas while maintaining a sufficient gas shielding effect.

<Modification>

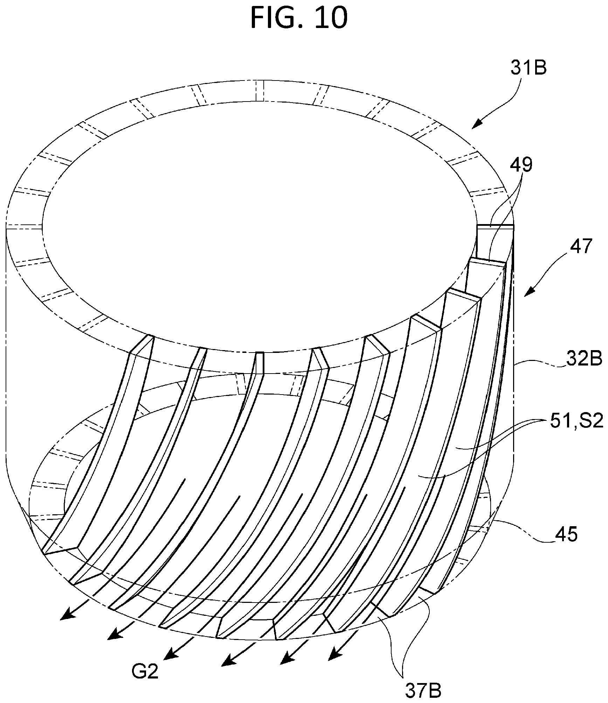

Fig. 10 is a perspective view of a schematic configuration of a shielding jig 31B of a modification in which a rectification unit 47 that controls a flow direction of the shielding gas G2 is provided in the shielding jig 31A of the second configuration example. In Fig. 10, only a lower portion of the second gas supply member 38B in the second outer shell member 32B is illustrated.

In the shielding jig 31B of the modification, the rectification unit 47 is provided in the second annular space S2 inside the second outer shell member 32B. Other configurations are the same as configurations of the above-described shielding jig 31A.

The rectification unit 47 is provided in the second annular space S2 and makes the flow of the shielding gas G2 in a spiral shape. The rectification unit 47 can be formed by, for example, disposing fins 49 of sheet metal between an outer surface of the first outer shell member 32A and an inner surface of the second outer shell member 32B.

The fins 49 are arranged at equal intervals along a circumferential direction and define a plurality of gas flow paths 51 each having a spiral shape. The flow direction of the shielding gas G2 flowing through each gas flow path 51 is regulated by the fins 49, and the shielding gas G2 is sprayed in an air flow having a spiral shape from the second opening 37B. Thus, an annular gas curtain that rotates in the circumferential direction is formed.

The rectification unit 47 includes the fins 49, but is not limited thereto. For example, a hole or groove having a spiral shape such as a life ring may be formed in an outer peripheral surface of the first outer shell member 32A or an inner peripheral surface of the second outer shell member 32B. Further, the rectification unit 47 may be configured such that a plurality of spray nozzles for spraying the shielding gas are disposed in a bottom portion of the second annular space S2 in a state where a spray direction is inclined in the circumferential direction.

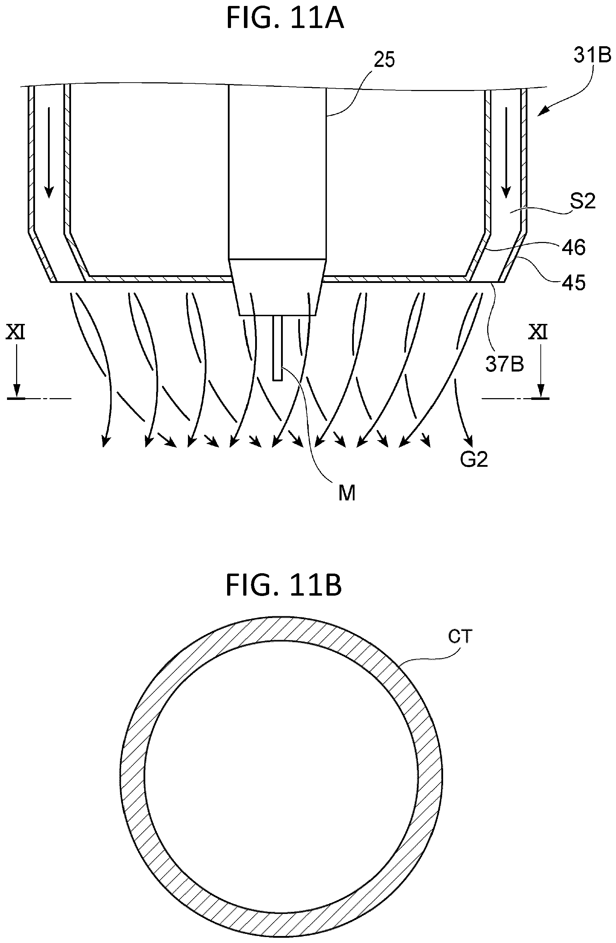

Fig. 11A is a partial cross-sectional view of a bottom portion of the shielding jig 31B for illustrating a state of the shielding gas G2 sprayed from the shielding jig 31B. Fig. 11B is a cross-sectional view of a formed gas curtain, taken along line XI-XI illustrated in Fig. 11A, for illustrating the state of the shielding gas G2 sprayed from the shielding jig 31B.

As illustrated in Fig. 11A, the shielding gas G2 sprayed from the second opening 37B of the second annular space S2 forms a gas curtain CT having a flow of a spiral shape by the above-described rectification unit 47, and as illustrated in Fig. 8B, has a circular annular shape with a continuous cross section.

According to the gas curtain CT having the flow of the spiral shape, since a rotation operation is applied to the shielding gas, it is possible to more reliably prevent air from flowing into the weld, and it is possible to further improve the gas shielding effect for the weld. Further, since the shielding gas is sprayed while rotating, it is possible to prevent inclusion of residual air in the pipe of the shielding gas. Further, also in this case, after the removal of the air present in the first annular space S1 is completed, when the supply of the shielding gas G1 is stopped and the shielding gas is supplied only to the second annular space S2, a consumption amount of the shielding gas can be saved.

Fume generated during welding may be suctioned by a suction path which may be provided in the gas curtain.

According to the shielding jigs 31, 31A, and 31B described above, since the cylindrical shape centered on the welding torch 23 is formed, the annular gas curtain centered on the welding torch 23 is formed. Therefore, the gas shielding effect in an any moving direction of the welding torch 23 is obtained, and the trajectory of the welding torch 23 is not restricted. For example, since it is possible to control the restriction on the movement direction of the welding torch 23 as compared with the before-shielding and the after-shielding provided according to the travel direction of the welding torch 23, welding with high flexibility in terms of construction is possible.

As described above, the present invention is not limited to the above-described embodiments, and combinations of the respective configurations of the embodiments and changes and applications made by those skilled in the art based on the description of the specification and common techniques are also intended for the present invention and are included in the scope of protection.

As described above, the following matters are disclosed in the present specification.

(1) A shielding jig which is attached to a welding torch for shield welding, the welding torch being configured to melt and solidify a filler metal material made of a metal to form a weld bead, the shielding jig comprising:

a first outer shell member that surrounds the welding torch, is disposed to form a radial gap from the welding torch, and is configured to define a first annular space having a first opening in a bottom portion thereof;
a first gas supply member that is disposed to surround the welding torch inside the first outer shell member, and is configured to supply a shielding gas to the first annular space; and
a dispersing member that is disposed below the first gas supply member in the first annular space, and is configured to disperse the shielding gas.

According to this shielding jig, the entire periphery of the weld can be gas-shielded in a wide range.

(2) The shielding jig according to (1), wherein the following formula (2) is satisfied for a flow velocity Vout of the shielding gas, wherein Vout is a flow velocity of the shielding gas sprayed from the first opening, Vin is a stopcock flow velocity of the shielding gas supplied to the first annular space, $d_0$ is an outer diameter of the welding torch, and $d_1$ is an outer diameter of the first outer shell member.

[Formula 2]

$$V_{out} = \frac{V_{in} \, [\mathrm{mm^3/sec}]}{\frac{\pi}{4} \times (\mathrm{d}_1^2 - \mathrm{d}_0^2) \, [\mathrm{mm^2}]} \geq 113.17 \, [\mathrm{mm/sec}] \quad \cdots (2)$$

According to this shielding jig, it is possible to effectively prevent inclusion of impurities in the weld.

(3) The shielding jig according to (1) or (2), further comprising:

a holding member that is attached to an inner peripheral surface of the first outer shell member and is configured to hold the dispersing member in the first annular space.

According to this shielding jig, the dispersing member can be stably held in the first annular space.

(4) The shielding jig according to (3), wherein the holding member is provided with a shielding member configured to restrict passage of the shielding gas.

According to this shielding jig, by providing the shielding member in the holding member, a flow rate of the shielding gas and a position of the shielding gas sprayed from the holding member can be freely adjusted.

(5) The shielding jig according to any one of (1) to (4), further comprising:

a second outer shell member that is disposed outside an outer peripheral surface of the first outer shell member so as to have a radial gap therebetween, and is configured to define a second annular space having a lid portion at an upper portion and a second opening at a bottom portion between the second outer shell member and the first outer shell member; and
a second gas supply member configured to supply the shielding gas to the second annular space.

According to this shielding jig, it is possible to further enhance an effect of preventing the inclusion of impurities in the weld.

(6) The shielding jig according to (5), wherein the following relation is satisfied:

$$d_1 - d_0 > d_2 - d_1,$$

wherein $d_0$ is an outer diameter of the welding torch, $d_1$ is an outer diameter of the first outer shell member, and $d_2$ is an inner diameter of the second outer shell member.

According to this shielding jig, since a difference in radial direction lengths between the outer periphery of the first outer shell member and the outer periphery of the welding torch is larger than a radial direction width of the annular spaces, the shielding gas can also be sprayed to a position away from the welding torch than the radial direction width of the first annular space. Accordingly, the shielding gas can be retained in a space centered on the welding torch.

(7) The shielding jig according to (6), wherein $d_0 > d_2 - d_1$ is satisfied.

According to this shielding jig, since the radial direction width of the annular space is smaller than the outer diameter of the welding torch, the flow velocity at which the shielding gas is sprayed from the annular space can be increased and the gas shielding effect can be improved.

(8) The shielding jig according to any one of (5) to (7), wherein a rectification unit to make a flow direction of the shielding gas in a spiral shape is provided in the second annular space.

According to this shielding jig, it is possible to more reliably prevent air from flowing into the weld, and the gas shielding effect for the weld can be further improved. Further, since the shielding gas is sprayed while rotating, it is possible to prevent inclusion of residual air in the pipe of the shielding gas.

(9) The shielding jig according to any one of (5) to (8), wherein a narrowed portion in which a radius distance of the second outer shell member gradually decreases along an axial direction of the welding torch is formed at least at a bottom portion of the second outer shell member.

According to this shielding jig, a point where the shielding gas sprayed from the welding torch and the shielding gas sprayed from the second annular space collide with each other comes close to the welding torch side, and it is expected that a retention effect of the shielding gas is enhanced.

(10) The shielding jig according to any one of (1) to (9), wherein the filler metal is pure titanium or a titanium alloy.

According to this shielding jig, high-quality welding can be performed even by using a welding base metal that is easily affected by inclusion of oxygen and nitrogen.

(11) A gas-shielded metal arc welding apparatus comprising:

the shielding jig according to any one of (1) to (10).

According to this gas-shielded metal arc welding apparatus, a high gas shielding property can be obtained, and stable gas-shielded metal arc welding can be performed.

The present application is based on Japanese Patent Application No. 2021-129974 filed on August 6, 2021, the contents of which are incorporated herein by reference.

REFERENCE SIGNS LIST

| | |
|---|---|
| 11 | Welding robot |
| 13 | Robot driving unit |
| 15 | Filler metal supply unit |
| 17 | Shielding gas supply unit |
| 19 | Welding power supply unit |
| 21 | Control unit |
| 23 | Welding torch |
| 25 | Shield nozzle |
| 27 | Contact tip |
| 29 | Base plate |
| 31, 31A, 31B | Shielding jig |
| 32A | First outer shell member |
| 32B | Second outer shell member |
| 33 | First gas supply pipe |
| 34 | Second gas supply pipe |
| 35 | First hollow pipe |

| 36 | Second hollow pipe |
|---|---|
| 37A | First opening |
| 37B | Second opening |
| 38A | First gas supply member |
| 38B | Second gas supply member |
| 41 | Dispersing member |
| 42 | Holding member |
| 45 | Narrowed portion |
| 47 | Rectification unit |
| 49 | Fins |
| 51 | Gas flow path |
| 100 | Gas-shielded metal arc welding apparatus |
| B | Weld bead |
| G0, G1, G2 | Shielding gas |
| M | Filler metal |
| S0 | Internal space |
| S1 | First annular space |
| S2 | Second annular space |
| W | Additively-manufactured object |

**Claims**

1.  A shielding jig which is attached to a welding torch for shield welding, the welding torch being configured to melt and solidify a filler metal material made of a metal to form a weld bead, the shielding jig comprising:

    a first outer shell member that surrounds the welding torch, is disposed to form a radial gap from the welding torch, and is configured to define a first annular space having a first opening in a bottom portion thereof;
    a first gas supply member that is disposed to surround the welding torch inside the first outer shell member, and is configured to supply a shielding gas to the first annular space; and
    a dispersing member that is disposed below the first gas supply member in the first annular space, and is configured to disperse the shielding gas.

2.  The shielding jig according to claim 1, wherein the following formula (1) is satisfied for a flow velocity Vout of the shielding gas,
    [Formula 1]

$$V_{out} = \frac{V_{in}\,[\mathrm{mm^3/sec}]}{\frac{\pi}{4} \times (\mathrm{d_1^2 - d_0^2})\,[\mathrm{mm^2}]} \geq 113.17\,[\mathrm{mm/sec}] \quad \cdots (1)$$

    wherein Vout is a flow velocity of the shielding gas sprayed from the first opening, Vin is a stopcock flow velocity of the shielding gas supplied to the first annular space, $d_0$ is an outer diameter of the welding torch, and $d_1$ is an outer diameter of the first outer shell member.

3.  The shielding jig according to claim 1, further comprising:
    a holding member that is attached to an inner peripheral surface of the first outer shell member and is configured to hold the dispersing member in the first annular space.

4.  The shielding jig according to claim 2, further comprising:
    a holding member that is attached to an inner peripheral surface of the first outer shell member and is configured to hold the dispersing member in the first annular space.

5.  The shielding jig according to claim 3, wherein the holding member is provided with a shielding member configured to restrict passage of the shielding gas.

6.  The shielding jig according to claim 4, wherein the holding member is provided with a shielding member configured to restrict passage of the shielding gas.

7. The shielding jig according to any one of claims 1 to 6, further comprising:

a second outer shell member that is disposed outside an outer peripheral surface of the first outer shell member to have a radial gap therebetween, and is configured to define a second annular space having a lid portion at an upper portion and a second opening at a bottom portion between the second outer shell member and the first outer shell member; and
a second gas supply member configured to supply the shielding gas to the second annular space.

8. The shielding jig according to claim 7, wherein the following relation is satisfied:

$$d_1 - d_0 > d_2 - d_1,$$

wherein $d_0$ is an outer diameter of the welding torch, $d_1$ is an outer diameter of the first outer shell member, and $d_2$ is an inner diameter of the second outer shell member.

9. The shielding jig according to claim 8, wherein $d_0 > d_2 - d_1$ is satisfied.

10. The shielding jig according to claim 7, wherein a rectification unit to make a flow direction of the shielding gas in a spiral shape is provided in the second annular space.

11. The shielding jig according to claim 8, wherein a rectification unit to make a flow direction of the shielding gas in a spiral shape is provided in the second annular space.

12. The shielding jig according to claim 9, wherein a rectification unit to make a flow direction of the shielding gas in a spiral shape is provided in the second annular space.

13. The shielding jig according to claim 10, wherein a rectification unit to make a flow direction of the shielding gas in a spiral shape is provided in the second annular space.

14. The shielding jig according to claim 7, wherein a narrowed portion in which a radius distance of the second outer shell member gradually decreases along an axial direction of the welding torch is formed at least at a bottom portion of the second outer shell member.

15. The shielding jig according to claim 8, wherein a narrowed portion in which a radius distance of the second outer shell member gradually decreases along an axial direction of the welding torch is formed at least at a bottom portion of the second outer shell member.

16. The shielding jig according to claim 9, wherein a narrowed portion in which a radius distance of the second outer shell member gradually decreases along an axial direction of the welding torch is formed at least at a bottom portion of the second outer shell member.

17. The shielding jig according to claim 10, wherein a narrowed portion in which a radius distance of the second outer shell member gradually decreases along an axial direction of the welding torch is formed at least at a bottom portion of the second outer shell member.

18. The shielding jig according to any one of claims 1 to 6, wherein the filler metal is pure titanium or a titanium alloy.

19. A gas-shielded metal arc welding apparatus comprising:
the shielding jig according to any one of claims 1 to 6.

FIG. 1

EP 4 364 878 A1

# FIG. 2

# FIG. 3

# FIG. 4

# FIG. 5

# FIG. 6A

# FIG. 6B

# FIG. 7

FIG. 8

# FIG. 9

# FIG. 10

## FIG. 11A

25  31B

S2

46

45

XI  XI

37B

G2

M

## FIG. 11B

CT

## INTERNATIONAL SEARCH REPORT

| International application No. |
| --- |
| **PCT/JP2022/027859** |

### A. CLASSIFICATION OF SUBJECT MATTER

**B23K 9/29**(2006.01)i; **B23K 9/16**(2006.01)i
FI: B23K9/29 L; B23K9/16 M

According to International Patent Classification (IPC) or to both national classification and IPC

### B. FIELDS SEARCHED

Minimum documentation searched (classification system followed by classification symbols)

B23K9/29; B23K9/16

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2016-16430 A (NIPPON STEEL & SUMIKIN PIPELINE & ENGINEERING CO LTD) 01 February 2016 (2016-02-01) paragraphs [0018]-[0033], fig. 1-3 | 1-9, 14-16, 18-19 |
| A | | 10-13, 17 |
| Y | JP 39-4226 B1 (UNION CARBIDE CORPORATION) 11 April 1964 (1964-04-11) p. 2, right column, lines 18-36, fig. 4-6 | 1-9, 14-16, 18-19 |
| A | | 10-13, 17 |
| Y | Microfilm of the specification and drawings annexed to the request of Japanese Utility Model Application No. 108100/1977 (Laid-open No. 35726/1979) (TOKYO SHIBAURA ELECTRIC CO., LTD.) 08 March 1979 (1979-03-08), pp. 2-3, fig. 4 | 7-9, 14-16 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 August 2022** | **16 August 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/027859**

| Patent document cited in search report | | | Publication date (day/month/year) | Patent family member(s) | Publication date (day/month/year) |
|---|---|---|---|---|---|
| JP | 2016-16430 | A | 01 February 2016 | (Family: none) | |
| JP | 39-4226 | B1 | 11 April 1964 | (Family: none) | |
| JP | 54-35726 | U1 | 08 March 1979 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H01048678 A

- JP 2021129974 A